(19) **Europäisches Patentamt European Patent Office Office européen des brevets**

(11) **EP 4 546 542 A1**

(12) **EUROPEAN PATENT APPLICATION**
published in accordance with Art. 153(4) EPC

(43) Date of publication:
30.04.2025 Bulletin 2025/18

(21) Application number: 23839972.9

(22) Date of filing: 12.07.2023

(51) International Patent Classification (IPC):
$H01M\ 50/446^{(2021.01)}$  $H01M\ 50/417^{(2021.01)}$
$H01M\ 50/431^{(2021.01)}$  $H01M\ 50/489^{(2021.01)}$
$H01M\ 50/403^{(2021.01)}$  $H01M\ 50/449^{(2021.01)}$

(52) Cooperative Patent Classification (CPC):
H01M 50/403; H01M 50/417; H01M 50/431;
H01M 50/446; H01M 50/449; H01M 50/489;
Y02E 60/10

(86) International application number:
PCT/KR2023/009973

(87) International publication number:
WO 2024/014881 (18.01.2024 Gazette 2024/03)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 12.07.2022 KR 20220085967

(71) Applicant: LG Energy Solution, Ltd.
Seoul 07335 (KR)

(72) Inventors:
• **BAE, Won-Sik**
  **Daejeon 34122 (KR)**
• **LEE, So-Yeong**
  **Daejeon 34122 (KR)**
• **KIM, Kyung-Tae**
  **Daejeon 34122 (KR)**
• **JEONG, So-Mi**
  **Daejeon 34122 (KR)**

(74) Representative: **Hoffmann Eitle**
**Patent- und Rechtsanwälte PartmbB**
**Arabellastraße 30**
**81925 München (DE)**

(54) **SEPARATOR SUBSTRATE FOR ELECTROCHEMICAL DEVICE AND SEPARATOR COMPRISING SAME**

(57)    The present disclosure relates to a separator substrate for an electrochemical device, a separator and an electrochemical device including the same. The separator substrate for an electrochemical device includes a crosslinked polyolefin resin and chromium (Cr), has a gel fraction of 3-80%, shows a standard deviation ($\triangle$d) of thickness measured in at least 100 optional points of 0.5 $\mu$m or less, and has 10 or less spots with a longer side length of 50 $\mu$m or more per 1 m$^2$.

**EP 4 546 542 A1**

**Description**

TECHNICAL FIELD

The present disclosure relates to a separator substrate for an electrochemical device, a separator including the same, and an electrochemical device including the same.
The present application claims priority to Korean Patent Application No. 10-2022-0085967 filed on July 12, 2022 in the Republic of Korea, the disclosures of which are incorporated herein by reference.

BACKGROUND ART

Secondary batteries represented by lithium-ion secondary batteries have been used widely as power sources for portable electronic instruments, such as notebook computers, cellular phones, digital cameras, camcorders, or the like. In addition, recently, such batteries have been applied to various industrial fields, including automobiles, by virtue of their characteristics of high energy density.
Lithium secondary batteries have been spotlighted, since they have a higher operating voltage and significantly higher energy density as compared to conventional batteries, such as Ni-MH, Ni-Cd and sulfuric acid-lead batteries using an aqueous electrolyte. However, such lithium-ion batteries have a risk of ignition and explosion due to the use of an organic electrolyte, and are disadvantageous in that they require a complicated manufacturing process. More recently, lithium-ion polymer batteries improve such disadvantages of lithium-ion batteries and are regarded as one of the next-generation batteries. However, such lithium-ion polymer batteries still have a relatively lower capacity as compared to lithium-ion batteries, and particularly, show an insufficient discharge capacity at low temperature. Therefore, there is an imminent need for improvement of such disadvantages.
Evaluation and securement of safety of such electrochemical devices are very important. With regard to safety characteristics of electrochemical devices, there is great concern about explosion when an electrochemical device is overheated to cause thermal runaway or perforation of a separator. Particularly, a polyolefin-based porous substrate used conventionally as a separator for an electrochemical device shows a severe heat shrinking behavior at a temperature of 100°C or higher due to its material property and a characteristic during its manufacturing process, including stretching, thereby causing a short-circuit between a positive electrode and a negative electrode.
To solve the above-mentioned safety problems of an electrochemical device, there has been suggested a separator having a porous inorganic coating layer formed by applying a mixture of an excessive amount of inorganic particles with a binder polymer onto at least one surface of a porous substrate having a plurality of pores. However, there is a continuous need for further reinforcing the safety.

DISCLOSURE

Technical Problem

The present disclosure is designed to solve the problems of the related art, and therefore the present disclosure is directed to providing a separator substrate having improved thickness uniformity and heat resistance, and a separator having reinforced thickness uniformity and heat resistance by using the separator substrate. The present disclosure is also directed to providing an electrochemical device having improved safety, while showing excellent resistance characteristics at the same time.

Technical Solution

In one aspect of the present disclosure, there is provided a separator substrate according to any one of the following embodiments.
According to the first embodiment of the present disclosure, there is provided a separator substrate for an electrochemical device which includes a crosslinked polyolefin resin and chromium (Cr), has a gel fraction of 3-80%, shows a standard deviation ($\triangle$d) of thickness measured in at least 100 optional points of 0.5 $\mu$m or less, and has 10 or less spots with a longer side length of 50 $\mu$m or more per 1 $m^2$.
According to the second embodiment of the present disclosure, there is provided the separator substrate for an electrochemical device as defined in the first embodiment, which has a gel fraction of 3-50%.
According to the third embodiment of the present disclosure, there is provided the separator substrate for an electrochemical device as defined in the first or the second embodiment, which has a content of chromium of 0.1-20 ppm.
According to the fourth embodiment of the present disclosure, there is provided the separator substrate for an electrochemical device as defined in any one of the first to the third embodiments, wherein the crosslinked polyolefin resin has a crosslinked structure including a structure derived from radical polymerization between vinyl groups mediated by a thermal initiator.

According to the fifth embodiment of the present disclosure, there is provided the separator substrate for an electrochemical device as defined in any one of the first to the fourth embodiments, wherein the thermal initiator includes a peroxide-based compound, a persulfate-based compound, an azo-based compound or a mixture thereof.

According to the sixth embodiment of the present disclosure, there is provided the separator substrate for an electrochemical device as defined in any one of the first to the fifth embodiments, which further includes at least one selected from titanium (Ti), aluminum (Al), magnesium (Mg), zirconium (Zr) and vanadium (V).

According to the seventh embodiment of the present disclosure, there is provided the separator substrate for an electrochemical device as defined in any one of the first to the sixth embodiments, which shows a standard deviation ($\triangle$d) of thickness measured in at least 100 optional points of 0.3 $\mu$m or less.

In another aspect of the present disclosure, there is provided a method for manufacturing a separator substrate according to any one of the following embodiments.

According to the eighth embodiment of the present disclosure, there is provided a method for manufacturing a separator substrate, including the steps of:

carrying out melt extrusion of starting materials including a polyolefin resin to obtain a molten polymer extrudate; molding and stretching the resultant molten polymer extrudate to obtain a polymer sheet; applying a coating solution containing a thermal initiator to the polymer sheet; and drying and thermally fixing the polymer sheet to which the coating solution is applied, wherein the polyolefin resin includes a polyolefin resin prepared by using an olefin polymerization catalyst containing chromium, and the separator substrate has a gel fraction of 3-80%.

According to the ninth embodiment of the present disclosure, there is provided the method for manufacturing a separator substrate as defined in the eighth embodiment, wherein the polyolefin resin in the starting materials includes a polyolefin resin having 100 or more terminal vinyl groups per 1,000,000 carbon atoms.

According to the tenth embodiment of the present disclosure, there is provided the method for manufacturing a separator substrate as defined in the eighth or the ninth embodiment, wherein the starting materials further include a polyolefin resin prepared by using an olefin polymerization catalyst free from chromium (Cr) and containing titanium (Ti), aluminum (Al), magnesium (Mg), zirconium (Zr), vanadium (V), or two or more of them.

According to the eleventh embodiment of the present disclosure, there is provided the method for manufacturing a separator substrate as defined in any one of the eighth to the tenth embodiment, wherein the content of the polyolefin resin prepared by using an olefin polymerization catalyst containing chromium is 10 wt% or more based on the total weight of the polyolefin resin of the starting materials.

In still another aspect of the present disclosure, there is provided a separator according to any one of the following embodiments.

According to the twelfth embodiment, there is provided a separator including the separator substrate as defined in any one of the first to the seventh embodiments and an inorganic coating layer formed on at least one surface of the separator substrate, wherein the inorganic coating layer includes inorganic particles and a binder ingredient.

In yet another aspect of the present disclosure, there is provided an electrode assembly according to the following embodiment.

According to the thirteenth embodiment of the present disclosure, there is provided an electrode assembly including a positive electrode, a negative electrode and a separator interposed between the positive electrode and the negative electrode, wherein the separator is the same as defined in the twelfth embodiment.

Advantageous Effects

The separator substrate according to an embodiment of the present disclosure includes polyolefin chains having a large amount of crosslinked structures, and thus shows improved thickness uniformity and heat resistance. Therefore, it is possible to provide an effect of significantly improving the operation stability, such as heat resistance, of an electrochemical device including a separator using such a separator substrate.

Particularly, the separator substrate according to an embodiment of the present disclosure is obtained by using a polyolefin resin prepared by using an olefin polymerization catalyst containing chromium and including a large amount of terminal vinyl groups, and a thermal initiator for crosslinking between the terminal vinyl groups. The separator substrate has a large amount of crosslinked structures formed between polyolefin chains to realize improved thickness uniformity and heat resistance, but the mechanism of the present disclosure is not limited thereto.

BEST MODE

Hereinafter, preferred embodiments of the present disclosure will be described in detail.

The present disclosure relates to a separator substrate for an electrochemical device, a separator including the same, and an electrochemical device including the same. Herein, the term 'electrochemical device' refers to a device which converts chemical energy into electrical energy through electrochemical reactions, and has a concept covering a primary battery and a secondary battery. The secondary battery is a rechargeable battery and includes a lithium-ion battery, a nickel-cadmium battery, a nickel-metal hydride battery, or the like.

First, the separator substrate for an electrochemical device according to an embodiment of the present disclosure will be explained in detail.

The separator substrate for an electrochemical device according to an embodiment of the present disclosure includes a crosslinked polyolefin resin and chromium (Cr), has a gel fraction of 3-80%, shows a standard deviation ($\triangle$d) of thickness measured in at least 100 optional points of 0.5 $\mu$m or less, and has 10 or less spots with a longer side length of 50 $\mu$m or more per 1 m$^2$.

According to an embodiment of the present disclosure, the polyolefin resin is not particularly limited in terms of its monomer, as long as it is used for a porous separator substrate. Particular examples of the polyolefin resin may include, but are not limited to: polyethylene, polypropylene, polybutylene, polypentene, polyhexene, polyoctene, a homopolymer of a monomer selected from ethylene, propylene, butene, pentene, 4-methylpentene, hexene and octene, or a copolymer of at least two of them; or a mixture thereof.

As described hereinafter with reference to the method for manufacturing the separator substrate, the polyolefin resin includes a polyolefin resin prepared by using an olefin polymerization catalyst containing chromium (Cr). Therefore, the separator substrate according to an embodiment of the present disclosure includes chromium (Cr). Particularly, the separator substrate includes chromium as residue of the chromium catalyst used for the polymerization of the polyolefin resin.

According to an embodiment of the present disclosure, for example, the olefin polymerization catalyst containing chromium may include chromium oxide, and a support for supporting the chromium oxide, and the support may include at least one ingredient selected from silica, titania, alumina, zirconia and aluminum phosphate, but the scope of the present disclosure is not limited thereto.

According to an embodiment of the present disclosure, the content of chromium contained in the separator substrate may be 0.1-20 ppm, 1-10 ppm, or 5-10 ppm, but is not limited thereto. For example, the content of chromium in the separator substrate may be a value measured by using an inductively coupled plasma-mass spectrometer (ICP-MS). When the content of chromium contained in the separator substrate falls within the above-defined range, it is possible to provide an advantageous effect in terms of the number of vinyl groups in the polyolefin resin before crosslinking and the crosslinking degree of the crosslinked polyolefin resin prepared by using the catalyst, but the scope of the present disclosure is not limited thereto.

According to an embodiment of the present disclosure, the polyolefin resin prepared by using the olefin polymerization catalyst containing chromium is characterized in that it includes a large amount of active terminal vinyl groups capable of crosslinking induced by a thermal initiator in the subsequent step. In this manner, the separator substrate may include a polyolefin resin having a large number of crosslinked structures formed between polyolefin chains through the crosslinking induced by the thermal initiator.

As used herein, the term 'crosslinked polyolefin resin' refers to a polyolefin resin in which the vinyl groups present in the chains of polyolefin resin used as a starting material of the separator substrate are activated through the initiation reaction, and thus crosslinked structures are formed in the chains of polyolefin resin and/or between the chains of polyolefin resin.

Particularly, the crosslinked polyolefin resin may include $C(Sp^2)$-$C(Sp^2)$ bound crosslinked structures through the activation of the vinyl group present at one end in the polyolefin chain, caused by the thermal initiator, resulting in radical formation, and then through the polymerization of the resultant radical with the radical formed in the polyolefin chain of another molecule and/or radical formed at the other end in the polyolefin chain of the same molecule.

Therefore, the crosslinked polyolefin resin includes no terminal vinyl group, or may include a reduced number of terminal vinyl groups as compared to the number of terminal vinyl groups present in the polyolefin resin before crosslinking.

In a similar point of view, the crosslinked polyolefin resin may include an increased number of $C(Sp^2)$-$C(Sp^2)$ bonds as compared to the number of $C(Sp^2)$-$C(Sp^2)$ bonds contained in the polyolefin resin before crosslinking.

According to an embodiment of the present disclosure, the polyolefin resin prepared by using the olefin polymerization catalyst containing chromium may include 100 or more, 200 or more, 300 or more, 400 or more, 500 or more, 600 or more, 700 or more, 800 or more, 900 or more, or 950 or more terminal vinyl groups per 1,000,000 carbon atoms, as the number of functional groups is determined from the result of $^1$H-NMR spectrometry using a nuclear magnetic resonance spectrometry instrument (Bruker 500 NMR, 14.1 telsa). The upper limit of the number of terminal vinyl groups may be 1,500 or less, or 1,000 or less, within the above-defined range, but is not limited thereto.

Therefore, according to an embodiment of the present disclosure, the number of terminal vinyl groups of the polyolefin resin before crosslinking may be 100 or more, 200 or more, 300 or more, 400 or more, 500 or more, 600 or more, 700 or more, 800 or more, 900 or more, or 950 or more per 1,000,000 carbon atoms.

According to another embodiment of the present disclosure, when the separator substrate further includes a polyolefin resin prepared by using a catalyst other than the olefin polymerization catalyst containing chromium, the number of terminal vinyl groups of the polyolefin resin before crosslinking and the content of terminal vinyl groups of the polyolefin resin before crosslinking are determined preferably based on the number of terminal vinyl groups and the content of terminal vinyl groups of the total polyolefin resin.

As described above, the crosslinked structure in the crosslinked polyolefin resin includes a structure derived from the radical polymerization between vinyl groups, mediated by a thermal initiator.

According to an embodiment of the present disclosure, any thermal initiator may be used with no particular limitation, as long as it is an initiator capable of forming radicals by activating the vinyl groups present in the polyolefin chains. Particularly, any thermal initiator may be used with no particular limitation, as long as it is an initiator capable of forming radicals by activating the terminal vinyl groups present in the polyolefin chains. Particular examples of the thermal initiator may include a peroxide-based compound, a persulfate-based compound, an azo-based compound or a mixture thereof.

Particular examples of the peroxide-based compound may include, but are not limited to: 2,5-dimethyl-2,5-di-(tert-butylperoxy)hexane (DHBP), benzoyl peroxide, acetyl peroxide, dilauryl peroxide, di-tert-butyl peroxide, dicumyl peroxide, cumyl peroxide, hydrogen peroxide, or a mixture of two or more of them.

The persulfate-based compound is not particularly limited, as long as it is a compound including at least one of peroxymonopersulfate ion ($SO_5^{2-}$) and peroxydisulfate ion ($S_2O_8^{2-}$). Particular examples of the persulfate-based compound may include, but are not limited to: sodium peroxymonosulfate ($Na_2SO_5$), potassium peroxymonosulfate ($KHSO_5$), sodium peroxydisulfate ($Na_2S_2O_8$), ammonium peroxydisulfate (($NH_4)_2S_2O_8$), potassium peroxydisulfate ($K_2S_2O_8$), or a mixture of two or more of them.

Particular examples of the azo-based compound may include, but are not limited to: 2,2'-azobis(2-methylpropionitrile) (AIBN).

According to an embodiment of the present disclosure, the separator substrate may further include a polyolefin resin prepared by using another type of olefin polymerization catalyst, in addition to the polyolefin resin prepared by using the olefin polymerization catalyst containing chromium as mentioned above.

For example, such another type of olefin polymerization catalyst may be an olefin polymerization catalyst including at least one of titanium (Ti), aluminum (Al), magnesium (Mg), zirconium (Zr) and vanadium (V). Therefore, the separator substrate may further include at least one of titanium (Ti), aluminum (Al), magnesium (Mg), zirconium (Zr) and vanadium (V).

According to an embodiment of the present disclosure, such another type of olefin polymerization catalyst may be a metallocene catalyst, a Ziegler-Natta catalyst or a mixture thereof, but the scope of the present disclosure is not limited thereto.

Herein, the polyolefin resin prepared by using the olefin polymerization catalyst containing chromium will be referred to as 'Cr-type polyolefin', and the polyolefin resin prepared by using another type of olefin polymerization catalyst will be referred to as 'ZT-type polyolefin'.

According to an embodiment of the present disclosure, when the separator substrate includes a polyolefin resin prepared by using another type of olefin polymerization catalyst, in addition to a polyolefin resin prepared by using an olefin polymerization catalyst containing chromium, the weight ratio of the Cr-type polyolefin to the ZT-type polyolefin may be 1:9-9:1, particularly 2:8-8:2, 3:7-7:3, or 3:7-5:5, but is not limited thereto. When the separator substrate includes a Cr-type polyolefin together with a ZT-type polyolefin, it is possible to provide an advantageous effect in terms of increase of the molecular weight of the separator substrate by virtue of the ZT-type polyolefin having a high molecular weight, but the scope of the present disclosure is not limited thereto.

According to an embodiment of the present disclosure, the weight ratio (Cr-type polyolefin:ZT-type polyolefin) of the Cr-type polyolefin to the ZT-type polyolefin in the separator substrate may be 10:0 (i.e. no ZT-type polyolefin is present) to 1:9, particularly, 10:0-5:5, 1:9-5:5, 10:0-3:7, 1:9-3:7, or 3:7-5:5, but the scope of the present disclosure is not limited thereto.

According to an embodiment of the present disclosure, the separator substrate may further include, besides polyolefin, at least one selected from polymer resins, such as polyethylene terephthalate, polybutylene terephthalate, polyacetal, polyamide, polycarbonate, polyimide, polyetherether ketone, polyether sulfone, polyphenylene oxide, polyphenylene sulfide, and polyethylene naphthalate. In addition, the separator substrate may include a non-woven fabric or a porous polymer film or a laminate of two or more layers thereof, but is not particularly limited thereto.

According to an embodiment of the present disclosure, as described hereinafter, when the separator substrate includes a polyolefin resin prepared by using an olefin polymerization catalyst containing chromium, and the polyolefin sheet derived from the polyolefin resin is thermally fixed during the process for manufacturing the separator substrate, crosslinked structures are formed in the chains of the polyolefin resin and/or between the chains of the polyolefin resin through the radical polymerization mediated by the thermal initiator. In this manner, it is possible to provide the effects of improving not only the thickness uniformity and heat resistance of the separator substrate but also the appearance characteristics of the separator substrate, but the mechanism of the present disclosure is not limited thereto.

The separator substrate according to the present disclosure shows a gel fraction of 3-80%. This may be a characteristic of the separator substrate including a polyolefin resin having a high crosslinking degree, but the characteristics of the present disclosure are not limited thereto. For example, the separator substrate may have a gel fraction of 3-70%, 3-60%, 3-50%, 3-45%, 3-40%, 3-30%, 3-20%, or 3-10%.

As described above, the polyolefin resin is characterized by a high crosslinking degree by virtue of the crosslinked structures formed in the polyolefin chains and/or between the polyolefin chains. Therefore, the polyolefin resin before crosslinking is dissolved in a benzene-based solvent, while the crosslinked polyolefin resin is characterized in that it is not dissolved in a benzene-based solvent but allows determination of its gel fraction.

Herein, the gel fraction may be determined as follows. First, 0.2 g of a separator substrate specimen to be tested is introduced to a 120 mesh-stainless steel net, and extraction is carried out in trichlorobenzene at 100°C for 12 hours, followed by drying in a vacuum oven at 100°C for 12 hours. Then, the weight of the specimen remaining in the stainless steel net is measured, and the gel fraction is determined according to the following formula. The gel fraction may be represented by the average value of measurements of three specimens in order to improve the accuracy of determination.

$$\text{Gel fraction (\%)} = \{(\text{Weight (g) of remaining specimen}) / 0.2 \text{ g}\} \times 100$$

The separator substrate according to an embodiment of the present disclosure shows a standard deviation ($\triangle$d) of thickness measured in at least 100 optional points of 0.5 $\mu$m or less. Therefore, the separator substrate may show a high thickness uniformity.

According to an embodiment of the present disclosure, the separator substrate may show a standard deviation ($\triangle$d) of thickness measured in at least 100 optional points of 0.45 $\mu$m or less, 0.4 $\mu$m or less, 0.35 $\mu$m or less, 0.3 $\mu$m or less, or 0.25 $\mu$m or less. As the standard deviation approaches 0, the thickness uniformity is increased. Thus, the lower limit of the standard deviation of thickness may be 0.

The thickness of the separator substrate may be determined by any method for measuring the thickness of a separator substrate. For example, the thickness may be a value measured through the scanning electron microscopic (SEM) image analysis of the separator substrate or measured by using a known thickness gauge. For example, the thickness gauge may be VL-50S-B (available from Mitutoyo Co.), but is not limited thereto.

In general, when a polymer resin and other additives, including a diluting agent and a crosslinking agent, as starting materials are introduced at once to an extruder and allowed to react therein in manufacturing a separator substrate, some problems are observed in that side reactions may occur in the extruder, or spots having a difference in brightness as compared to the surroundings are generated on the surface of the separator substrate due to the starting materials not molten by the lack of miscibility among the starting materials.

As used herein, the term 'spot' refers to a zone having higher brightness and lower transparency as compared to the surroundings on the surface of the separator substrate and thus having a white spot-like shape.

According to an embodiment of the present disclosure, the number of spots may be evaluated by the observation with naked eyes or microscopy, such as SEM.

According to an embodiment of the present disclosure, the separator substrate shows improvement in terms of defects in appearance, since the polyolefin resin as a starting material is introduced and molded into a polyolefin sheet, and then a thermal initiator is introduced, thereby reducing the generation of such spots. For example, the separator substrate may have 10 or less spots with a longer side length of 50 $\mu$m or more per 1 m$^2$. Particularly, under the above-mentioned condition, the number of spots may be 0-7, 0-5, or 0-3. When the spots are formed in the above-defined range, it is possible to provide an advantageous effect in terms of preventing non-coating caused by defects in appearance upon ceramic coating and generation of a short in a battery.

According to another embodiment of the present disclosure, the separator substrate may have a thickness of 4-20 $\mu$m. When the thickness of the separator substrate falls within the above-defined range, it is possible to provide an advantageous effect in terms of conductive barrier function and separator resistance, but the scope of the present disclosure is not limited thereto.

According to an embodiment of the present disclosure, the polyolefin resin contained in the separator substrate may have a weight average molecular weight (Mw) of 100,000-5,000,000 g/mol. When the weight average molecular weight of the polyolefin resin falls within the above-defined range, it is possible to provide an advantageous effect in terms of ensuring the mechanical properties of the separator substrate and shut-down characteristics, but the scope of the present disclosure is not limited thereto.

According to an embodiment of the present disclosure, the Cr-type polyolefin may have a weight average molecular weight of 100,000-600,000 g/mol, 100,000-400,000 g/mol, or 150,000-350,000 g/mol. In addition, the ZT-type polyolefin may have a weight average molecular weight of 400,000-2,000,000 g/mol, 400,000-1,500,000 g/mol, 500,000-1,500,000 g/mol, or 600,000-1,200,000 g/mol. As such, the polyolefins prepared by using different catalysts characteristically have a different range of molecular weight. According to the present disclosure, it is possible to further improve the physical properties of the separator substrate by using such two types of polyolefins having a different range of molecular weight, but the scope of the present disclosure is not limited thereto.

Herein, the weight average molecular weight (Mw) of the polyolefin resin may be determined by using gel permeation chromatography (GPC) (PL GPC220, Agilent Technologies) under the following conditions:

- Column: PL Olexis (Polymer Laboratories)
- Solvent: Trichlorobenzene (TCB)
- Flow rate: 1.0 mL/min
- Sample concentration: 1.0 mg/mL
- Injection amount: 200 $\mu$L
- Column temperature: 160°C
- Detector: Agilent High Temperature RI detector
- Standard: Polystyrene (corrected with tertiary function)

According to an embodiment of the present disclosure, the separator substrate may have a porous structure. For example, the separator substrate may have a pore diameter of 0.01-0.10 $\mu$m and a porosity of 30-70 vol%. When the pore diameter and porosity of the separator substrate fall within the above-defined ranges, it is possible to provide an advantageous effect in terms of the ion permeability and mechanical strength of the separator substrate, but the scope of the present disclosure is not limited thereto. The pore diameter and porosity of the separator substrate may be determined by a known method, and for example, may be determined by using an instrument (e.g. BELSORP mini II) of BELSORP series available from BEL Japan Co.

According to an embodiment of the present disclosure, the separator substate may show excellent heat resistance. For example, the separator substrate may show a fracture temperature of 155°C or higher. For example, the separator substrate may show a fracture temperature of 160°C or higher, 170°C or higher, 180°C or higher, 190°C or higher, 195°C or higher, or 200°C or higher. As the fracture temperature of the separator substrate increases, the separator substrate has higher heat resistance. Therefore, the upper limit of the fracture temperature of the separator substrate is not particularly limited. For example, the fracture temperature of the separator substrate may be 500°C or lower, 450°C or lower, 350°C or lower, or 300°C or lower.

Herein, the fracture temperature of the separator substrate may be determined by applying a load of 0.01 N to a separator substrate specimen to be tested by using a thermal mechanical analysis (TMA) instrument and observing how the specimen is deformed while the temperature is increased at a rate of 5°C/min, wherein the temperature at which the separator substrate is shrunk, elongated while the temperature is increased, and then fractured, is defined as the fracture temperature.

The separator substrate for an electrochemical device according to an embodiment of the present disclosure uses a polyolefin resin prepared by using an olefin polymerization catalyst containing chromium, and has crosslinked structures formed between the polyolefin chains by using a thermal initiator for thermal fixing of a polyolefin sheet stretched from the polyolefin resin, and thus shows improved appearance characteristics, thickness uniformity and heat resistance. However, the scope of the present disclosure is not limited thereto.

Hereinafter, the method for manufacturing a separator substrate for an electrochemical device according to an embodiment of the present disclosure will be explained in detail.

In another aspect of the present disclosure, there is provided a method for manufacturing a separator substrate, including the steps of:

carrying out melt extrusion of starting materials including a polyolefin resin to obtain a molten polymer extrudate; molding and stretching the resultant molten polymer extrudate to obtain a polymer sheet; applying a coating solution containing a thermal initiator to the polymer sheet; and drying and thermally fixing the polymer sheet to which the coating solution is applied. Herein, the polyolefin resin includes a polyolefin resin prepared by using an olefin polymerization catalyst containing chromium.

First, starting materials including the polyolefin resin prepared by using an olefin polymerization catalyst containing chromium is melt extruded to obtain a molten polymer extrudate.

According to an embodiment of the present disclosure, to carry out the melt extrusion, the starting materials preferably include a diluting agent as well as the polyolefin resin prepared by using an olefin polymerization catalyst containing chromium.

For example, the diluting agent may include those used generally for a wet process for manufacturing a separator, and particular examples thereof include liquid or solid paraffin oil, mineral oil, wax, soybean oil, or the like.

According to an embodiment of the present disclosure, the diluting agent may include those capable of liquid-liquid phase separation with a polyolefin resin, and particular examples thereof include, but are not limited to: a phthalic acid ester, such as dibutyl phthalate, dihexyl phthalate, dioctyl phthalate, or the like; an aromatic ether, such as diphenyl ether, benzyl ether, or the like; a C10-C20 fatty acid, such as palmitic acid, stearic acid, oleic acid, linolic acid, linoleic acid, or the like; a C10-C20 fatty acid alcohol, such as palmitic acid alcohol, stearic acid alcohol, oleic acid alcohol, or the like; a fatty acid ester in which one or at least two fatty acids of saturated or unsaturated fatty acids whose fatty acid group has 4-26 carbon atoms, or unsaturated fatty acids whose double bond is substituted with epoxy are ester-bound with a C1-C10 alcohol having 1-8 hydroxyl groups, such as palmitic acid mono-, di- or tri-ester, stearic acid mono-, di- or tri-ester, oleic acid mono-, di- or tri-ester, linoleic acid mono-, di- or tri-ester, or the like; or a mixture of two or more of them.

According to an embodiment of the present disclosure, the content of the diluting agent may be 100-350 parts by weight, 125-300 parts by weight, or 150-250 parts by weight, based on 100 parts by weight of the polyolefin. When the total content of the diluting agent satisfies the above-defined range, it is possible to prevent the problems caused by an excessively large amount of polyolefin, including a decrease in porosity and pore size, a significant drop in permeability due to the lack of interconnection of pores, an increase in viscosity of the polyolefin composition and extrusion load, resulting in a difficulty in processing. It is also possible to prevent the problems caused by an excessively small amount of polyolefin, including extrusion of the polyolefin in the form of gel, without thermodynamic kneading with the diluting agent, resulting in failure at elongation and nonuniform thickness. However, the scope of the present disclosure is not limited thereto.

According to an embodiment of the present disclosure, the starting materials may further include, besides the polyolefin resin prepared by using an olefin polymerization catalyst containing chromium and the diluting agent, a polyolefin resin prepared by using another type of olefin polymerization catalyst, such as an olefin polymerization catalyst containing titanium (Ti), aluminum (Al), magnesium (Mg), zirconium (Zr), vanadium (V), or two or more of them, and other polymer resins. Reference will be made to the above description about such another type of polyolefin resin and other polymer resins.

For example, according to an embodiment of the present disclosure, the starting materials may further include a polyolefin resin prepared through the olefin polymerization using a Ziegler-Natta catalyst.

According to an embodiment of the present disclosure, in the starting materials, the weight ratio of the polyolefin resin (Cr-type polyolefin) prepared by using an olefin polymerization catalyst containing chromium to the polyolefin resin (ZT-type polyolefin) prepared by using another type of olefin polymerization catalyst may be 1:9-9:1, particularly 2:8-8:2, 3:7-7:3, or 3:7-5:5, but is not limited thereto.

According to another embodiment of the present disclosure, when the ZT-type polyolefin is further used in addition to the Cr-type polyolefin, the content of the polyolefin resin prepared by using an olefin polymerization catalyst containing chromium may be 10 wt% or more based on 100 wt% of the total weight of the starting materials. Particularly, the content of the polyolefin resin prepared by using an olefin polymerization catalyst containing chromium may be 15 wt% or more, 20 wt% or more, 25 wt% or more, 30 wt% or more, 35 wt% or more, 40 wt% or more, 45 wt% or more, 50 wt% or more, and/or 99.9 wt% or less, 99 wt% or less, 95 wt% or less, or 90 wt% or less, based on 100 wt% of the total weight of the starting materials, but the scope of the present disclosure is not limited thereto.

According to an embodiment of the present disclosure, the step of preparing a molten polymer extrudate may be carried out by using a single screw extruder or a twin screw extruder, but the scope of the present disclosure is not limited thereto.

Next, the resultant molten polymer extrudate is molded and stretched to obtain a polymer sheet.

According to an embodiment of the present disclosure, after extruding the molten polymer extrudate, a cooled extrudate may be formed by using a general casting or calendering process using water-cooling or air-cooling mode.

According to an embodiment of the present disclosure, it is possible to provide a separator substrate having improved mechanical strength and puncture strength through the molding and stretching step.

According to an embodiment of the present disclosure, the stretching may be carried out by sequential or simultaneous stretching using a roll or tenter. The stretching ratio may be 3 times or more, or 5-12 times, each in the machine direction and transverse direction, and the total stretching ratio may be 20-120 times. When the stretching ratio satisfies the above-defined ratio, it is possible to provide an advantageous effect in terms of the thickness uniformity of the resultant separator substrate and balance of physical properties between the machine direction and the transverse direction, but the scope of the present disclosure is not limited thereto.

According to an embodiment of the present disclosure, the stretching temperature may vary with the melting point of the polyolefin resin used for the separator substrate and the concentration and type of the diluting agent with no particular limitation.

Then, the diluting agent is extracted from the stretched polymer sheet to obtain a porous polymer sheet.

According to an embodiment of the present disclosure, an organic solvent showing high solubility to the diluting agent may be used in the stretched sheet to extract the diluting agent, followed by drying, thereby forming a porous sheet.

There is no particular limitation in the organic solvent, as long as it can extract the diluting agent. Particularly, in terms of the extraction efficiency and drying rate, methyl ethyl ketone, methylene chloride, hexane, etc. may be used.

According to an embodiment of the present disclosure, the extraction may be carried out by using any conventional solvent extraction process, such as an immersion process, a solvent spray process or a ultrasonication process, and such processes may be used alone or in combination. According to an embodiment of the present disclosure, after carrying out extraction, the content of residual diluting agent may be 1 wt% or less. When the content of residual diluting agent falls within the above-defined range, it is possible to provide an advantageous effect in terms of the permeability and mechanical properties of the resultant separator substrate and the efficiency of the manufacturing process, but the scope of the present disclosure is not limited thereto.

The extraction time and extraction temperature may vary with the thickness of the polymer sheet and the type of the polymer with no particular limitation.

Then, a coating solution containing a thermal initiator is applied to the polymer sheet.

According to the present disclosure, a coating solution containing a thermal initiator is applied to the porous polymer sheet in which pores are already exposed. As described above, the thermal initiator can form radicals by activating the terminal vinyl groups in the chains of polyolefin resin. Therefore, a large amount of crosslinked structures can be formed in the polyolefin chains by the thermal initiator, the coating solution can infiltrate even into the fibrils present on the surfaces of the pores formed in advance, and the heat resistance of the separator substrate can be improved, but the effects of the present disclosure are not limited thereto.

According to an embodiment of the present disclosure, the coating solution may further include conventional additives for improving specific functions, such as a surfactant, an oxidation stabilizer, UV stabilizer, an antistatic agent, a nucleating agent, or the like, if necessary. However, the scope of the present disclosure is not limited thereto.

After that, the polymer sheet to which the coating solution is applied is dried and thermally fixed to obtain a separator substrate.

The thermal fixing is a process of fixing and heating a porous film so that the porous film to be shrunk may be fixed forcibly to remove residual stress.

According to the method for manufacturing a separator substrate disclosed herein, since the coating solution including the thermal initiator is applied before thermal fixing, it is possible to obtain a separator substrate based on a polyolefin resin having a large amount of crosslinked structures formed through the crosslinking in the polyolefin chains and/or between the polyolefin chains by the radical polymerization mediated by the thermal initiator upon the thermal fixing.

According to an embodiment of the present disclosure, the thermal fixing temperature and time may vary with the vinyl group content in the polyolefin chains and the composition of the coating solution with no particular limitation.

The separator substrate obtained by the above-described method may have the above-described characteristics of the separator substrate.

According to an embodiment of the present disclosure, the separator substrate obtained by the above-described method may have a gel fraction of 3-80%.

According to an embodiment of the present disclosure, the separator substrate obtained by the above-described method may show a standard deviation ($\triangle$d) of thickness measured in at least 100 optional points of 0.5 $\mu$m or less.

According to an embodiment of the present disclosure, the separator substrate obtained by the above-described method may have 10 or less spots with a longer side length of 50 $\mu$m or more per 1 m$^2$.

According to an embodiment of the present disclosure, the separator substrate obtained by the above-described method may have a gel fraction of 3-80%, show a standard deviation ($\triangle$d) of thickness measured in at least 100 optional points of 0.5 $\mu$m or less, and may have 10 or less spots with a longer side length of 50 $\mu$m or more per 1 m$^2$.

In still another aspect of the present disclosure, there is provided a separator including the separator substrate as described above and an inorganic coating layer formed on at least one surface of the separator substrate, wherein the inorganic coating layer includes inorganic particles and a binder ingredient.

The inorganic coating layer may have a porous structure derived from the pores resulting from the interstitial volumes among the inorganic particles. The pores may be controlled in terms of pore size and porosity (pore volume ratio) depending on the particle size and particle size distribution. Such a structure enhances the resistance against metallic foreign materials present in an electrode and inhibits shrinking of the polyolefin separator as a substrate, thereby providing an electrochemical device with reinforced safety. In this context, the inorganic coating layer may include inorganic particles in an amount of 70-99.5 wt%, preferably 80-99 wt%, based on 100 wt% of the inorganic coating layer.

According to an embodiment of the present disclosure, there is no particular limitation in the inorganic particles, as long as they are electrochemically stable. In other words, there is no particular limitation in the inorganic particles, as long as they cause no oxidation and/or reduction in the range (e.g. 0-5 V based on Li/Li$^+$) of operating voltage of an applicable electrochemical device. Particularly, when using inorganic particles having a high dielectric constant, it is possible to improve the ion conductivity of an electrolyte by increasing the dissociation degree of an electrolyte salt, such as a lithium salt, in a liquid electrolyte.

For the above-mentioned reasons, the inorganic particles may preferably include inorganic particles having a high dielectric constant of 5 or more, preferably 10 or more. Non-limiting examples of the inorganic particles having a dielectric constant of 5 or more may include at least one selected from BaTiO$_3$, Pb(Zr,Ti)O$_3$ (PZT), Pb$_{1-x}$La$_x$Zr$_{1-y}$Ti$_y$O$_3$ (PLZT, wherein $0 < x < 1$, $0 < y < 1$), Pb(Mg$_{1/3}$Nb$_{2/3}$)O$_3$-PbTiO$_3$ (PMN-PT), hafnia (HfO$_2$), SrTiO$_3$, SnO$_2$, CeO$_2$, MgO, Mg(OH)$_2$, NiO, CaO, ZnO, ZrO$_2$, SiO$_2$, Y$_2$O$_3$, Al$_2$O$_3$, AlOOH, Al(OH)$_3$, SiC and TiO$_2$.

According to an embodiment of the present disclosure, although there is no particular limitation in the average particle diameter ($D_{50}$) of the inorganic particles, the inorganic particles preferably have an average particle diameter of 0.1-2.5 μm in order to form an inorganic coating layer having a uniform thickness and to provide an adequate level of porosity.

According to the present disclosure, the binder ingredient may include an acrylic polymer and/or PVDF-based polymer. For example, the acrylic polymer may include a (meth)acrylic polymer. The (meth)acrylic polymer includes (meth) acrylate as a monomer. In addition, particular examples of the monomer include butyl (meth)acrylate, 2-ethylhexyl (meth) acrylate, ethyl (meth)acrylate, methyl (meth)acrylate, n-propyl (meth)acrylate, isopropyl (meth)acrylate, t-butyl (meth) acrylate, pentyl (meth)acrylate, n-octyl (meth)acrylate, isooctyl (meth)acrylate, isononyl (meth)acrylate, lauryl (meth) acrylate, tetradecyl (meth)acrylate, and at least one of such monomers may be used. The PVDF-based polymer may include at least one selected from homopolymer of vinylidene fluoride (i.e. polyvinylidene fluoride), a copolymer of vinylidene fluoride with a copolymerizable monomer, and a mixture thereof. According to an embodiment, particular examples of the monomer include fluorinated monomers and/or chlorinated monomers. Non-limiting examples of the fluorinated monomers include at least one selected from: vinyl fluoride; trifluoroethylene (TrFE); chlorofluoroethylene (CTFE); 1,2-difluoroethylene; tetrafluoroethylene (TFE); hexafluoropropylene (HFP); perfluoro(alkylvinyl)ether, such as perfluoro(methylvinyl)ether (PMVE), perfluoro(ethylvinyl)ether (PEVE) or perfluoro(propylvinyl)ether (PPVE); perfluoro(1,3-dioxole); perfluoro(2,2-dimethyl-1,3-dioxole) (PDD); or the like, and at least one of such fluorinated monomers may be used. According to an embodiment of the present disclosure, the PVDF-based polymer may include at least one selected from polyvinylidene fluoride (PVDF), polyvinylidene fluoride-co-hexafluoropropylene (PVDF-HFP), polyvinylidene fluoride-co-chlorotrifluoroethylene (PVDF-CTFE), polyvinylidene fluoride-co-tetrafluoroethylene (PVDF-TFE) and polyvinylidene fluoride-co-trifluoroethylene (PVDF-TrFE).

According to an embodiment of the present disclosure, the separator may be obtained by coating the separator substrate with the inorganic coating layer.

First, the binder ingredient is dispersed or dissolved in a solvent to prepare a binder solution. Next, inorganic particles dispersed by a bead mill are introduced to the binder solution to prepare a slurry for forming an inorganic coating layer. Non-limiting examples of the solvent may be any one selected from the group consisting of water, acetone, tetrahydrofuran, methylene chloride, chloroform, dimethyl formamide, N-methyl-2-pyrrolidone (NMP) and cyclohexane, or a mixture of two or more of them.

The method for coating the slurry on the separator substrate may be any conventional coating method known to those skilled in the art, and particular examples of the method include dip coating, die coating, roll coating, comma coating, or a combination thereof. In addition, the drying may be carried out through a conventional process, such as natural drying or air blowing drying, with no particular limitation.

In still another aspect of the present disclosure, there is provided an electrode assembly including a positive electrode, a negative electrode and a separator interposed between the positive electrode and the negative electrode, wherein the separator is the same as described above.

Herein, the constitution of each of the positive electrode, negative electrode and electrode assembly is known to those skilled in the art, and detailed description thereof will be omitted.

In yet another aspect of the present disclosure, there is provided a secondary battery obtained by introducing the electrode assembly prepared as described above to a suitable casing and injecting an electrolyte thereto.

MODE FOR DISCLOSURE

Hereinafter, the present disclosure will be explained in more detail with reference to Examples. However, the following Examples are for illustrative purposes only, and the scope of the present disclosure is not limited thereto.

**[Manufacture of Separator Substrate]**

Example 1

First, 9 kg of a Cr-type polyolefin (TR570 available from DL Chemical) and 21 kg of a diluting agent (LP350F available from Kukdong Oil & Chem.) as starting materials were introduced to an extruder (Φ32 twin screw extruder available from Korea EM, L/D = 56), and melt extrusion was carried out at 200°C to obtain a molten polyolefin extrudate.

The resultant molten polyolefin extrudate was allowed to pass through a T-die, molded into the form of a sheet by using a cooling casting device, and then subjected to biaxial stretching (stretching in the machine direction (MD) and then in the transverse direction (TD)) by using a tenter-type sequential stretching machine to obtain a polyolefin sheet. Herein, the MD stretching ratio and the TD stretching ratio were 7 times and 6 times, respectively, and the MD stretching temperature and the TD stretching temperature were 115°C and 125°C, respectively.

Next, extraction was carried out by using methylene chloride to extract the diluting agent from the stretched polyolefin sheet, thereby providing a porous polyolefin sheet.

Then, a coating solution containing 10 wt% of dicumyl peroxide as a thermal initiator in ethanol as a solvent was applied to one surface of the porous polyolefin sheet.

After that, the polyolefin sheet coated with the coating solution was dried at 128°C and thermally fixed to obtain a separator substrate having crosslinked structures formed between the vinyl groups of the polyolefin resin in the polyolefin sheet. Herein, the resultant separator substrate had a thickness of 9.0 μm.

Example 2

A separator substrate was obtained in the same manner as Example 1, except that 0.9 kg of a Cr-type polyolefin and 8.1 kg of a ZT-type polyolefin (Korea Petrochemical Ind. Co. Ltd., VH350) (containing magnesium (Mg) and aluminum (Al)) were used as starting materials (weight ratio of Cr-type polyolefin:ZT-type polyolefin = 1:9). Herein, the resultant separator substrate had a thickness of 9.0 μm.

Example 3

A separator substrate was obtained in the same manner as Example 2, except that the weight ratio of Cr-type polyolefin:ZT-type polyolefin was 3:7. Herein, the resultant separator substrate had a thickness of 9.0 μm.

Example 4

A separator substrate was obtained in the same manner as Example 2, except that the weight ratio of Cr-type polyolefin:ZT-type polyolefin was 5:5. Herein, the resultant separator substrate had a thickness of 9.0 μm.

Comparative Example 1

A separator substrate was obtained in the same manner as Example 1, except that a ZT-type polyolefin (Korea Petrochemical Ind. Co. Ltd., VH035) (containing magnesium (Mg) and aluminum (Al)) was used instead of the Cr-type polyolefin as a starting material, and the step of applying a coating solution was not carried out. Herein, the resultant separator substrate had a thickness of 9.1 μm.

Comparative Example 2

A separator substrate was obtained in the same manner as Example 1, except that the step of applying a coating solution was not carried out. Herein, the resultant separator substrate had a thickness of 9.0 μm.

Comparative Example 3

A separator substrate was obtained in the same manner as Example 1, except that 0.45 kg of a Cr-type polyolefin and 8.55 kg of a ZT-type polyolefin (Korea Petrochemical Ind. Co. Ltd., VH350) (containing magnesium (Mg) and aluminum (Al)) were used as starting materials (weight ratio of Cr-type polyolefin:ZT-type polyolefin = 0.5:9.5). Herein, the resultant separator substrate had a thickness of 9.0 μm.

**[Compositional Analysis of Separator Substrate and Evaluation of Physical Properties]**

The separator substrate according to each of Examples 1 to 4 and Comparative Examples 1-3 was analyzed in terms of its ingredients and the physical properties were evaluated. The results are shown in the following Table 1.

Determination of Gel Fraction

First, 0.2 g of a separator substrate specimen was introduced to a 120-mesh stainless steel net, was subjected to extraction in trichlorobenzene at 100°C for 12 hours, and was dried in a vacuum oven at 100°C for 12 hours.

Then, the weight of the specimen remaining in the stainless steel net was measured, and the gel fraction was calculated according to the following formula. The gel fraction was provided as average of the measurements of three specimens for each separator substrate.

$$\text{Gel fraction (\%)} = \{(\text{Weight (g) of remaining specimen}) / 0.2 \text{ g}\} \times 100$$

Determination of Chromium Content

First, a separator substrate specimen was allowed to react with sulfuric acid and sulfated on a hot plate, and then sulfuric acid was removed. Then, the specimen was burned in an electric furnace at a temperature of 600°C for 4 hours to be decomposed into nitric acid and hydrogen peroxide. Then, once the specimen was dissolved clearly, it was diluted with tertiary ultrapure water to prepare a sample for analysis.

The content of chromium (Cr) in the separator substrate was determined by using an inductively coupled plasma-mass spectrometer (ICP-MS) (Axiom MC model, England, Thermo Elemental Ltd.)

Determination of Aluminum (Al) Content

When a Ziegler-Natta catalyst is used, aluminum (Al) is present on a separator substrate. Therefore, the content of aluminum was determined.

Determination of the content of aluminum was carried out in the same manner as the determination of the content of chromium.

Fracture Temperature

The separator substrate obtained as described above was analyzed in terms of fracture temperature by using a thermomechanical analysis (TMA) instrument (TA Instruments, TMA Q400).

Particularly, a load of 0.01 N was applied to the separator substrate specimen by using a thermal mechanical analysis (TMA) instrument, and it was observed how the specimen was deformed while the temperature was increased at a rate of 5°C/min. Herein, the temperature at which the separator substrate is shrunk, elongated while the temperature is increased, and then fractured, is defined as the fracture temperature.

Determination of Number of Spots

The number of spots with a longer side length of 50 $\mu$m or more per 1 $m^2$ was determined by the naked eyes.

Determination of Thickness Uniformity

First, the separator substrate was defined by 1 m in the width direction at an interval of 10 cm and defined by 30 m in the longitudinal direction at an interval of 3 m, and the thickness was measured at total 100 positions to determine the standard deviation of thickness.

[Table 1]

| | Type of polyolefin | Gel fraction (%) | Cr (ppm) | Al (ppm) | Fracture temperature (°C) | Number of spots | Thickness uniformity ($\triangle$d) ($\mu$m) |
|---|---|---|---|---|---|---|---|
| Ex. 1 | Cr-type | 35 | 8 | - | 202 | 0 | 0.21 |
| Ex. 2 | Cr-type:ZT-type (1:9) | 11 | 1.1 | 30.5 | 196 | 0 | 0.26 |
| Ex. 3 | Cr-type:ZT-type (3:7) | 17 | 3.0 | 21.0 | 199 | 0 | 0.25 |
| Ex. 4 | Cr-type:ZT-type (5:5) | 30 | 4.2 | 16.7 | 200 | 0 | 0.24 |
| Comp. Ex. 1 | ZT-type | 0 | - | 35.0 | 152 | 0 | 0.58 |
| Comp. Ex. 2 | Cr-type | 0 | 9 | - | 148 | 0 | 0.23 |
| Comp. Ex. 3 | Cr-type:ZT-type (0.5:9.5) | 2 | 0.2 | 34 | 151 | 0 | 0.39 |

As can be seen from the results of Table 1, the separator substrates obtained by using a Cr-type polyolefin resin as a starting material and applying a coating solution containing a thermal initiator after extruding the resin according to Examples 1-4 have a gel fraction of 35%, 11%, 17% and 30%, respectively, show a standard deviation of thickness of 0.5 $\mu$m or less, and have a fracture temperature of 160°C or higher.

On the contrary, the separator substrate using a ZT-type polyolefin resin alone and not subjected to coating with a thermal initiator-containing coating solution according to Comparative Example 1 shows poor results in terms of gel fraction, fracture temperature and thickness uniformity. In the case of Comparative Example 2 not subjected to coating with a thermal initiator-containing coating solution despite the use of a Cr-type polyolefin resin, it still shows poor results in terms of gel fraction and fracture temperature. In addition, in the case of Comparative Example 3 using an excessively small amount of Cr-type polyolefin resin, it shows a gel fraction of less than 3%.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A separator substrate for an electrochemical device which comprises a crosslinked polyolefin resin and chromium (Cr), has a gel fraction of 3-80%, shows a standard deviation ($\triangle$d) of thickness measured in at least 100 optional points of 0.5 $\mu$m or less, and has 10 or less spots with a longer side length of 50 $\mu$m or more per 1 m$^2$.

2. The separator substrate for an electrochemical device according to claim 1, which has a content of chromium of 0.1-20 ppm.

3. The separator substrate for an electrochemical device according to claim 1, which has a gel fraction of 3-50%.

4. The separator substrate for an electrochemical device according to claim 1, wherein the crosslinked polyolefin resin has a crosslinked structure including a structure derived from radical polymerization between vinyl groups mediated by a thermal initiator.

5. The separator substrate for an electrochemical device according to claim 4, wherein the thermal initiator comprises a peroxide-based compound, a persulfate-based compound, an azo-based compound or a mixture thereof.

6. The separator substrate for an electrochemical device according to claim 1, which further comprises at least one selected from titanium (Ti), aluminum (Al), magnesium (Mg), zirconium (Zr) and vanadium (V).

7. The separator substrate for an electrochemical device according to claim 1, which shows a standard deviation ($\triangle$d) of thickness measured in at least 100 optional points of 0.3 $\mu$m or less.

8. A method for manufacturing a separator substrate for an electrochemical device, comprising the steps of:

   carrying out melt extrusion of starting materials including a polyolefin resin to obtain a molten polymer extrudate;
   molding and stretching the resultant molten polymer extrudate to obtain a polymer sheet;
   applying a coating solution containing a thermal initiator to the polymer sheet; and
   drying and thermally fixing the polymer sheet to which the coating solution is applied,
   wherein the polyolefin resin comprises a polyolefin resin prepared by using an olefin polymerization catalyst containing chromium, and
   the separator substrate has a gel fraction of 3-80%.

9. The method for manufacturing a separator substrate for an electrochemical device according to claim 8, wherein the polyolefin resin in the starting materials comprises a polyolefin resin having 100 or more terminal vinyl groups per 1,000,000 carbon atoms.

10. The method for manufacturing a separator substrate for an electrochemical device according to claim 8, wherein the starting materials further comprise a polyolefin resin prepared by using an olefin polymerization catalyst free from chromium (Cr) and containing titanium (Ti), aluminum (Al), magnesium (Mg), zirconium (Zr), vanadium (V), or two or more of them.

11. The method for manufacturing a separator substrate for an electrochemical device according to claim 10, wherein the content of the polyolefin resin prepared by using an olefin polymerization catalyst containing chromium is 10 wt% or more based on the total weight of the polyolefin resin of the starting materials.

12. A separator for an electrochemical device comprising the separator substrate as defined in any one of claims 1 to 7 and an inorganic coating layer formed on at least one surface of the separator substrate, wherein the inorganic coating layer comprises inorganic particles and a binder ingredient.

13. An electrode assembly comprising a positive electrode, a negative electrode and a separator interposed between the positive electrode and the negative electrode, wherein the separator is the same as defined in claim 12.

## INTERNATIONAL SEARCH REPORT

| | International application No. |
|---|---|
| | **PCT/KR2023/009973** |

**A.  CLASSIFICATION OF SUBJECT MATTER**

**H01M 50/446**(2021.01)i; **H01M 50/417**(2021.01)i; **H01M 50/431**(2021.01)i; **H01M 50/489**(2021.01)i; **H01M 50/403**(2021.01)i; **H01M 50/449**(2021.01)i

According to International Patent Classification (IPC) or to both national classification and IPC

**B.  FIELDS SEARCHED**

Minimum documentation searched (classification system followed by classification symbols)

H01M 50/446(2021.01); B01D 71/26(2006.01); B29C 48/00(2019.01); B29C 48/08(2019.01); C08L 23/12(2006.01); H01M 10/0567(2010.01); H01M 10/30(2006.01); H01M 2/16(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 분리막(separator), 겔(gel), 두께(thickness), 표준편차(standard deviation), 반점 (spot), 전지(battery), 수지(resin), 크롬(chrome)

**C.  DOCUMENTS CONSIDERED TO BE RELEVANT**

| Category* | Citation of document, with indication, where appropriate, of the relevant passages | Relevant to claim No. |
|---|---|---|
| Y | KR 10-2020-0086226 A (LG CHEM, LTD.) 16 July 2020 (2020-07-16)<br>See paragraphs [0012]-[0236] and claims 1-18. | 1-13 |
| Y | JP 2001-167749 A (TOYOBO CO., LTD.) 22 June 2001 (2001-06-22)<br>See claim 1. | 1-13 |
| Y | US 2019-0161603 A1 (JAPAN POLYPROPYLENE CORPORATION) 30 May 2019 (2019-05-30)<br>See paragraphs [0112]-[0113] and claims 1-4. | 1-7,12-13 |
| Y | KR 10-2015-0013088 A (LG CHEM, LTD.) 04 February 2015 (2015-02-04)<br>See claims 1-20. | 4-5,8-11 |
| A | KR 10-2020-0095868 A (LG CHEM, LTD.) 11 August 2020 (2020-08-11)<br>See entire document. | 1-13 |

☐ Further documents are listed in the continuation of Box C.     ☑ See patent family annex.

| \* | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 October 2023** | **20 October 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/009973**

| Patent document cited in search report | | | Publication date (day/month/year) | Patent family member(s) | | | Publication date (day/month/year) |
|---|---|---|---|---|---|---|---|
| KR | 10-2020-0086226 | A | 16 July 2020 | | None | | |
| JP | 2001-167749 | A | 22 June 2001 | | None | | |
| US | 2019-0161603 | A1 | 30 May 2019 | CN | 109312092 | A | 05 February 2019 |
| | | | | CN | 109312092 | B | 01 June 2021 |
| | | | | EP | 3450489 | A1 | 06 March 2019 |
| | | | | EP | 3450489 | A4 | 18 December 2019 |
| | | | | JP | 2018-030992 | A | 01 March 2018 |
| | | | | JP | 6962019 | B2 | 05 November 2021 |
| | | | | KR | 10-2019-0035607 | A | 03 April 2019 |
| | | | | KR | 10-2287688 | B1 | 06 August 2021 |
| | | | | US | 10947373 | B2 | 16 March 2021 |
| | | | | WO | 2018-034048 | A1 | 22 February 2018 |
| KR | 10-2015-0013088 | A | 04 February 2015 | CN | 105121539 | A | 02 December 2015 |
| | | | | CN | 105121539 | B | 28 September 2018 |
| | | | | EP | 2966120 | A1 | 13 January 2016 |
| | | | | EP | 2966120 | A4 | 09 November 2016 |
| | | | | EP | 2966120 | B1 | 20 February 2019 |
| | | | | JP | 2016-522841 | A | 04 August 2016 |
| | | | | JP | 6214755 | B2 | 18 October 2017 |
| | | | | KR | 10-1963808 | B1 | 29 March 2019 |
| | | | | US | 10217983 | B2 | 26 February 2019 |
| | | | | US | 2016-0126519 | A1 | 05 May 2016 |
| | | | | WO | 2015-012625 | A1 | 29 January 2015 |
| KR | 10-2020-0095868 | A | 11 August 2020 | | None | | |

Form PCT/ISA/210 (patent family annex) (July 2022)

**REFERENCES CITED IN THE DESCRIPTION**

**Patent documents cited in the description**

- KR 1020220085967